# EUROPÄISCHE PATENTSCHRIFT

(11) **EP 0 635 407 B1**
(45) Veröffentlichungstag und Bekanntmachung des Hinweises auf die Patenterteilung: **24.09.1997**
(21) Anmeldenummer: 94109208.2
(22) Anmeldetag: 15.06.1994
(51) Int. Cl.: B60R 22/46

(54) **Sicherheitsgurtanordnung für Kraftfahrzeuge mit Straffervorrichtung**
Vehicle safety belt device with pretensioner
Dispositif de ceinture de sécurité pour véhicules équipés d'un prétendeur

(30) Priorität: 23.06.1993 DE 4320854
(43) Veröffentlichungstag der Anmeldung: 25.01.1995
(73) Patentinhaber: TAKATA (EUROPE) VEHICLE SAFETY TECHNOLOGY GmbH, D-89081 Ulm (DE)
(72) Erfinder: Kopetzky, Robert, D-89173 Lonsee (DE); Wifling, Martin, A-8020 Graz (AT); Dr. Hermann, Steffan, A-8010 Graz (AT); Steen, James Thomas, Ballymena, BT43 7EA (GB)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- WO-A-87/00809
- DE-A- 3 629 300
- DE-U- 9 114 506
- DE-U- 9 202 932
- DE-U- 9 217 298
- DE-U- 9 217 304

## Beschreibung

Die Erfindung betrifft eine Sicherheitsgurtanordnung für Kraftfahrzeuge nach dem Oberbegriff des Patentanspruchs 1.

Um einen hohen Tragekomfort einer in einem Fahrzeug angeschnallten Person zu gewährleisten, kommt es bei mit einer automatischen Straffervorrichtung ausgerüsteten Sicherheitsgurtanordnung darauf an, daß nach dem Anlegen des Gurtes die vorzugsweise durch eine Spiralfeder gebildete Antriebsvorrichtung durch Drehen der Wickelrolle in Gurtaufwickelrichtung den Anschnallgurt nur in so lockere Anlage an die gesicherte Person bringt, daß diese sich in ihrer Bewegungsfreiheit nicht durch den Anschnallgurt behindert fühlt und insbesondere vom Anschnallgurt auf die Person nur eine kaum merkbare Kraft ausgeübt wird. Dadurch ist auch eine große Bewegungsfreiheit bei angelegtem Gurt gegeben. Dieses lockere Anlegen des Anschnallgurtes hat jedoch insbesondere beim Tragen von voluminöser Kleidung den Nachteil, daß bei einem Unfall, wenn die Person in den nur locker angelegten, dann gegen Abwickeln gesperrten Anschnallgurt hineinfällt, ein erheblicher Weg zurückgelegt wird, bevor der Anschnallgurt seine haltende Wirkung ausüben kann. Dieses Hineinfallen in den nur locker gespannten Gurt kann zu erheblichen Verletzungen der angeschnallten Person führen. Aus diesem Grunde ist es schon bekanntgeworden (DE-OS 42 21 398), den nur locker durch die Antriebsvorrichtung gespannten Gurt bei unfallbedingten Beschleunigungen zunächst durch eine Straffervorrichtung strammzuziehen, so daß beim anschließenden Vorschnellen der gesicherten Person von vornherein einen einwandfreie Halterung gegeben ist. Besonders vorteilhaft ist es (DE-OS 42 25 218), in die Straffervorrichtung die Wickelrolle derart einzubeziehen, daß bei unfallbedingten Beschleunigungen die normale, den Anschnallgurt nur locker spannende Antriebsvorrichtung durch einen zusätzlichen Antrieb übersteuert wird, derart, daß dann schlagartig der Sicherheitsgurt fest an die gesicherte Person angelegt wird, worauf dann beim anschließenden Wirksamwerden der Sperrvorrichtung eine Sicherung der fest angezogenen Position des Anschnallgurts gewährleistet ist.

Bei einer gattungsgemäßen Sicherheitsgurtanordnung für Kraftfahrzeuge (DE-U-92 17 304) wird die Strafferscheibe nach dem In-Eingriff-Kommen ihres Innenzahnkranzes mit dem Zahnrad so geschwenkt, daß ihr Außenumfang mit einer Führungsplatte in Eingriff kommt, welche eine Drehung um ihren virtuellen Mittelpunkt gewährleistet, wenn das flexible Zugmittel weiter ausgezogen wird. Da der Eingriff des Umfanges der Strafferscheibe mit der Führungsplatte erst nach einem gewissen Abrollen des Innenzahnkranzes auf dem Zahnrad erfolgt und der Gegenkraft-Wiederlagerpunkt um annähernd 90° zur Eingriffsstelle des Innenzahnkranzes in das Zahnrad versetzt ist, besteht bei der bekannten Anordnung die Gefahr, daß bei während eines Unfalles auftretenden starken Beschleunigungen die beiden Zahnungen wieder außer Eingriff kommen.

Aus diesem Grunde ist bei einem weiteren bekannten Gurtstraffer (DE-U-92 02 932) bereits ein Distanzstück vorgesehen, welches nach dem Eingriff des Innenzahnkranzes in das Zahnrad den Eingriff aufrechterhält.

Aufgrund der Relativverschiebung der Achsen der Strafferscheibe und der Wickelrolle zwecks In-Eingriff-Kommens des Innenzahnkranzes mit dem Zahnrad sind diese beiden Bauelemente nach dem In-Eingriff-Kommen der beiden Zahnungen exzentrisch zueinander angeordnet, so daß eine Bewegungsübertragung nur aufgrund eines Abrollvorganges der beiden Zahnungen aufeinander möglich ist.

Das Ziel der vorliegenden Erfindung besteht darin, eine besonders betriebssichere, gleichwohl aber wirtschaftlich herstellbare und einfach ausgebildete Sicherheitsgurtanordnung der eingangs genannten Gattung zu schaffen, bei der im normalen Betrieb die Straffervorrichtung außer Eingriff mit der Wickelrolle ist, jedoch bei unfallbedingten Beschleunigungen schlagartig und danach weitgehend unlösbar mit der Aufwickelrolle in drehfesten Eingriff kommt.

Zur Lösung dieser Aufgabe sind die Merkmale des kennzeichnenden Teils des Patentanspruchs 1 vorgesehen.

Aufgrund der Tatsache, daß die Wickelrolle und die Strafferscheibe nach In-Eingriff-Kommen von Innenzahnkranz und Zahnrad konzentrisch zueinander angeordnet sind, liegt eine echte drehfeste Verbindung zwischen diesen beiden Bauelementen vor, so daß die einmal miteinander in Eingriff gekommenen Zähne und Zahnvertiefungen ohne relatives Abrollen der beiden Zahnungen während des gesamten Straffungsvorganges in Eingriff bleiben. Auf diese Weise wird eine echte drehfeste Verbindung zwischen Strafferscheibe und Wickelrolle herbeigeführt. Außerdem wird durch die erfindungsgemäße Ausbildung eine besonders kompakte bauliche Anordnung erzielt.

Die Sollbruchachse nach Anspruch 2 hat eine Doppelfunktion als Drehachse für die Einsteuerung des Innenzahnkranzes in die Zahnung des Zahnrades sowie als Halteelement für die Strafferscheibe, welches jedoch in definierter und vorherbestimmbarer Weise abbricht, sobald der Eingriff bei einem Unfall erfolgt ist.

Im übrigen soll die Strafferscheibe gemäß den Ansprüchen 3 und 4 gehalten und die Sollbruchachse gemäß Anspruch 5 ausgebildet sein.

Durch die Verwendung von mindestens zwei Scherstiften zur Bildung der Sollbruchachse und der Halterung der Strafferscheibe im übrigen schafft die Erfindung ein besonders wirtschaftlich verfügbares und montierbares sowie auch äußerst betriebssicheres Mittel zur lösbaren Halterung der Strafferscheibe. Gesorgt werden muß nur dafür, daß unter Berücksichtigung der radialen Anordnung der Scherstifte der die Sollbruchachse darstellende Scherstift um soviel stärker ausgebildet ist, daß zunächst der bzw. die übrigen Scherstifte abbrechen und die für die Einsteuerung erforderliche Schwenkung der Strafferscheibe um die Sollbruchachse ermöglichen, bevor diese dann schließlich auch abbricht.

Da die durch den vorzugsweise pyrotechnischen Antrieb bereitgestellten Antriebskräfte für die Strafferscheibe bei einem Unfall sehr hoch sind, können erfindungsgemäß sehr stabile Scherstifte verwendet werden, die eine Lösung der Verbindung zwischen Strafferscheibe und Wickelrolle bei allen Erschütterungen im Normalbetrieb sicher verhindern.

Die für die Aufrechterhaltung des Eingriffs zwischen Innenzahnkranz und Zahnrad erforderlichen Mittel sind erfindungsgemäß in besonders zweckmäßiger Weise gemäß den Ansprüchen 6 bis 9 ausgebildet. Der Klemmkeil sollte dabei aus einem duktilen Material bestehen, damit sich beim Klemmeingriff die Zähne des Zahnrades etwas in den Klemmkeil eingraben können.

Die Einsteuerung der beiden Zahnungen ineinander wird durch die Maßnahmen des Anspruches 10 begünstigt.

Ein besonders bevorzugter Antrieb der Straffervorrichtung ergibt sich aus Anspruch 11.

Um in der Ruheposition den Antrieb möglichst platzsparend unterbringen zu können, gleichwohl aber bei einem Unfall eine ausreichende Auszugslänge für das Zugelement bereitzustellen, kann vorteilhafterweise die Ausführungsform nach Anspruch 12 verwendet werden.

Erfindungsgemäß erstreckt sich der Innenzahnkranz vorzugsweise nur über den Teil des Umfanges der Mittelöffnung, wo er tatsächlich gebraucht wird. Bevorzugte Winkelbereiche ergeben sich aus Anspruch 13. Der Innenzahnkranz kann sich vorteilhafterweise aber auch noch bis zu der Stelle erstrecken, wo der Klemmkeil zum Klemmeingriff kommt, damit sich nicht nur die Zähne des Zahnrades, sondern auch die des Innenzahnkranzes in den Klemmkeil eingraben können, wenn es bei einem Unfall zum Klemmeingriff kommt.

Durch die Merkmale des Anspruches 14 wird erreicht, daß sich die Strafferscheibe nach einer Auslösung am Gehäuserand gleitend abstützt, so daß vom Innenzahnkranz auf das Zahnrad bei einer Auslösung nur Umfangskräfte, jedoch keine radialen Kräfte übertragen werden.

Die Erfindung wird im folgenden beispielsweise anhand der Zeichnung beschrieben; in dieser zeigt:
- Fig. 1: eine schematische Vorderansicht einer erfindungsgemäßen Sicherheitsgurtanordnung im Bereich der Wickelrolle und der Straffervorrichtung im Nichteingriffszustand zwischen Innenzahnkranz und Zahnrad,
- Fig. 2: eine schematische Schnittansicht nach Linie 2-2 in Fig. 1, wobei gestrichelt auch noch die Führung des Anschnallgurtes über das Gurtschloß zu einem Befestigungspunkt am Chassis veranschaulicht ist,
- Fig. 3: eine Schnittansicht analog Fig. 2, jedoch unmittelbar nach dem In-Eingriff-Kommen von Innenzahnkranz und Zahnrad, die
- Fig. 4 bis 11: stark vereinfachte Ansichten analog den Fig. 2 und 3 zur Veranschaulichung der verschiedenen Bewegungsphasen I bis VIII der bei der erfindungsgemäßen Sicherheitsgurtanordnung verwendeten Straffervorrichtung vom Ruhezustand (I) über das In-Eingriff-Kommen von Innenzahnkranz und Zahnrad (II) bis zur Vollendung einer vollständigen Umdrehung der Strafferscheibe bzw. der mit ihr in drehfestem Eingriff stehenden Wickelrolle bei einem Unfall (VIII),
- Fig. 12: eine Ansicht analog den Fig. 2 bis 12 mit einer besonders vorteilhaften Ausbildung des Antriebs im Ruhezustand und
- Fig. 13: einen Ausschnitt des Ausführungsbeispieles nach Fig.12 im voll ausgezogenen Zustand des Zugelementes bei einem Unfall.

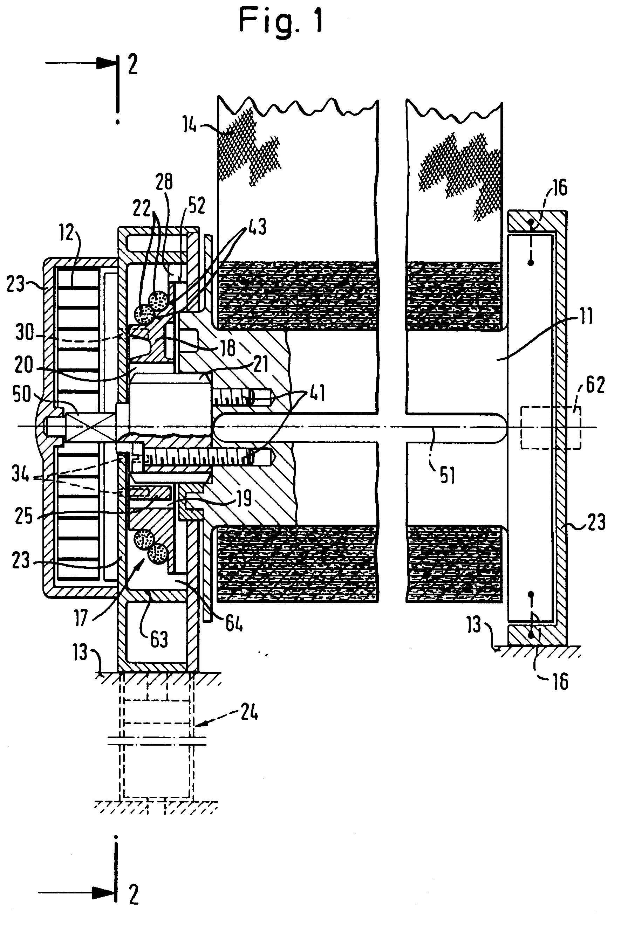

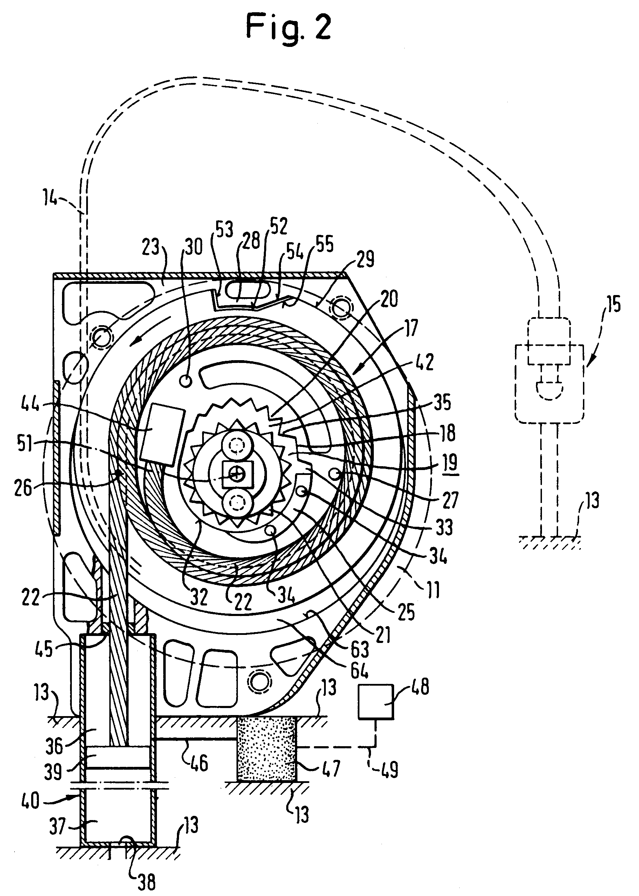

Nach der Fig. 2 erstreckt sich ein Anschnallgurt 14 von einer über ein Gehäuse 23 am Chassis 13 drehbar gelagerten Wickelrolle 11 um die nicht dargestellte zu sichernde Person herum zu einem von Hand zu öffnenden Gurtschloß 15 und von dort zu einem weiteren Punkt des Chassis 13. Der Einfachheit halber ist in Fig. 2 ein Zweipunktgurt dargestellt, doch läßt sich die Erfindung ohne weiteres auch bei Dreipunkt-Sicherheitsgurtanordnungen mit gleichen Vorteilen verwenden. Die Drehlagerung der Wickelrolle 11 am Gehäuse 23 ist bei 62 in Fig. 1 gezeigt bzw. angedeutet.

Nach Fig. 1 ist zentral an der linken Stirnseite der Wickelrolle 11 mittels Schrauben 41 ein Zahnrad 21 befestigt, welches zu etwa einem Drittel in einer am Umfang verzahnten Ausnehmung 42 der Wickelrolle 11 versenkt ist und mit dieser Innenverzahnung in formschlüssigem Eingriff steht. Auf diese Weise kann das Zahnrad 21 hohe Drehmomente auf die Wickelrolle 11 übertragen. Das Zahnrad 21 ist Bestandteil einer erfindungsgemäßen Straffervorrichtung 17, welche den Anschnallgurt 14 bei einem Unfall schlagartig strafft.

Zu etwa zwei Dritteln springt das Zahnrad 21 von der linken Stirnseite der Wickelrolle 11 in Fig. 1 vor, wo es gemäß Fig.1, 2 von einer flachen Strafferscheibe 18 mit einer Mittelöffnung 19 derart umgeben ist, daß es in der in den Fig. 1 und 2 dargestellten Ruheposition an keiner Stelle seines Umfanges mit der Strafferscheibe 18 in Berührung steht.

Auf die Strafferscheibe 18 ist ein Zugelement in Form eines Zugseiles 22 aufgewickelt, wozu zwei wendelförmig angeordnete Führungsrillen 43 im Umfang der Strafferscheibe 18 vorgesehen sind. Das aufgewickelte Ende des Zugseiles 22 ist durch ein Befestigungsmittel 44 (Fig.2) an der Strafferscheibe 18 sicher befestigt.

In der aus den Fig. 1 und 2 ersichtlichen Ruheposition ist das Zugseil 22 etwa zweimal um die Strafferscheibe 18 herumgewickelt, um dann an einem tangentialen Einlaufpunkt 26 (Fig.2) von der Strafferscheibe 18 abzuheben und sich geradlinig zu einem Antrieb 24 zu erstrecken, der im Ausführungsbeispiel durch eine Kolben-Zylinder-Anordnung mit einem am Chassis 13 befestigten Zylinder 40 und einem darin angeordneten Kolben 39 besteht. Das Zugseil 22 gelangt durch eine abgedichtete Öffnung 45 in den oberen Zylinderraum 36 und ist in geeigneter Weise fest mit dem Kolben 39 verbunden.

Der untere Zylinderraum 37 ist über eine Entlüftungsbohrung 38 ausreichenden Querschnitts mit der Umgebungsatmosphäre verbunden.

Der obere Zylinderraum 36 steht über eine Druckleitung 46 mit einer pyrotechnischen Ladung 47 in Strömungsverbindung, welche durch einen im Fahrzeug an geeigneter Stelle angeordneten Sensor 48 über eine Steuerleitung 49 gezündet werden kann. Die Zündung erfolgt bei Auftreten einer unfallbedingten Beschleunigung und führt zu einem schlagartigen Druckaufbau im oberen Zylinderraum 36.

Vom Zahnrad 21 erstreckt sich in Richtung von der Wickelrolle 11 weg eine Antriebswelle 50 zu einer spiralförmig angeordneten Wickelfeder 12, welche zwischen dem Gehäuse 23 und der Antriebswelle 50 in dem Sinne wirksam wird, daß auf die Wickelrolle 11 eine Wickelkraft in Richtung des Pfeiles in Fig. 2 kontinuierlich ausgeübt wird. Auf diese Weise wird der Anschnallgurt 14 nach dem Anlegen und dem Schließen des Gurtschlosses 15 locker an den Körper der zu sichernden Person selbsttätig angelegt.

Auf der von der Wickelfeder 12 axial abgewandten Seite der Wickelrolle 11 ist eine nur schematisch gestrichelt angedeutete Sperrvorrichtung 16 vorgesehen, welche mit dem am Chassis 13 befestigten Gehäuse 23 in dem Sinne zusammenwirkt, daß entweder bei schlagartig auftretenden übermäßigen Zugkräften am Anschnallgurt 14 oder ausgelöst durch den Sensor 48 oder einem anderen Sensor im Falle eines Unfalles das sonst mögliche Ausziehen des Anschnallgurtes 14 gegen die Kraft der Wickelfeder 12 schlagartig unterbunden wird.

Die Strafferscheibe 18 weist einen Innenzahnkranz 20 auf, der sich nach den Fig. 1 und 2 etwa über einen Winkel von 100° erstreckt, beginnend im Uhrzeigersinn etwa 40° von dem tangentialen Einlaufpunkt 26 entfernt und endend bei etwa 140°.

Diametral gegenüberliegend von dem tangentialen Einlaufpunkt 26 ist die Strafferscheibe 18 in deutlichem radialen Abstand von der Drehachse 51 mittels eines Scherstiftes 27 am Gehäuse 23 drehbar um den Scherstift 27 gelagert.

Annähernd diametral gegenüber der so gebildeten kombinierten Drehsollbruchachse 27 ist die Strafferscheibe 18 über einen schwächer ausgebildeten Scherstift 30 am Gehäuse 23 befestigt. In dieser Ruheposition weist der Innenumfang der Strafferscheibe 18 allseits einen radialen Abstand vom Zahnrad 21 auf.

In in Gurtabwickelrichtung gesehen schließt sich an den Innenzahnkranz 20 eine Ausbuchtung 33 in der Strafferscheibe 18 an, die einen Teil der Mittelöffnung 19 bildet und in welcher ein gekrümmter Klemmkeil 25 so untergebracht ist, daß er das Zahnrad 21 annähernd konzentrisch mit geringem Abstand umgibt. Der Klemmkeil 25 verjüngt sich in Gurtauszugsrichtung ebenso wie die ihn aufnehmende und im wesentlichen komplementär zu ihm ausgebildete Ausbuchtung 33. Der Klemmkeil 25 ist mit zwei Scherstiften 34 an der ihm gegenüberliegenden Wand des Gehäuses 23 befestigt.

Ausgehend vom tangentialen Einlaufpunkt 26 um 90° entgegen der Gurtaufwickelrichtung versetzt ist am Gehäuse 23 ein radial nach innen gerichteter Führungsvorsprung 28 vorgesehen, der in eine Umfangsvertiefung 52 der Strafferscheibe 18 eingreift. In Gurtaufwickelrichtung gesehen weist der Vorsprung 28 eine sich im wesentlichen radial erstreckende Endfläche 53 auf, während die umfangsmäßig entgegengesetzte Flache 54 ebenso wie die ihr parallel gegenüberliegende Fläche 55 der Strafferscheibe 18 mit dem Radius einen Winkel von mindestens 45° aufweisen, um die im folgenden beschriebene Schwenkbewegung der Strafferscheibe 18 um die Sollbruchachse 27 zu ermöglichen.

Anschließend an die Schrägfläche 55 ist die Strafferscheibe 18 mit einer Führungsumfangsfläche 29 versehen, die in der im folgenden zu beschreibenden Weise mit dem Führungsvorsprung 28 zusammenwirkt.

Nach Fig. 2 ist der am weitesten von dem tangentialen Einlaufpunkt 26 entfernte Zahn des Innenzahnkranzes 20 etwas weiter radial nach innen vorspringend und somit als Steuerzahn 35 ausgebildet. Der Steuerzahn 35 kommt bei einer Verschwenkung der Strafferscheibe 18 um die Sollbruchachse 27 zuerst mit dem Zahnrad 21 in Eingriff.

Für eine einwandfreie Einsteuerung des Innenzahnkranzes 20 in das Zahnrad 21 ist es weiter wichtig, daß die gesamte Verzahnung des Innenzahnkranzes 20 derart hinterschnitten ausgebildet wird, wie das insbesondere in den Fig. 2 bis 11 zu erkennen ist. Das heißt, daß die in Drehrichtung liegenden Flanken ausgehend von dem am Anfang liegenden Steuerzahn 35 zunehmend flacher und die Zähne auch weniger tief ausgebildet werden.

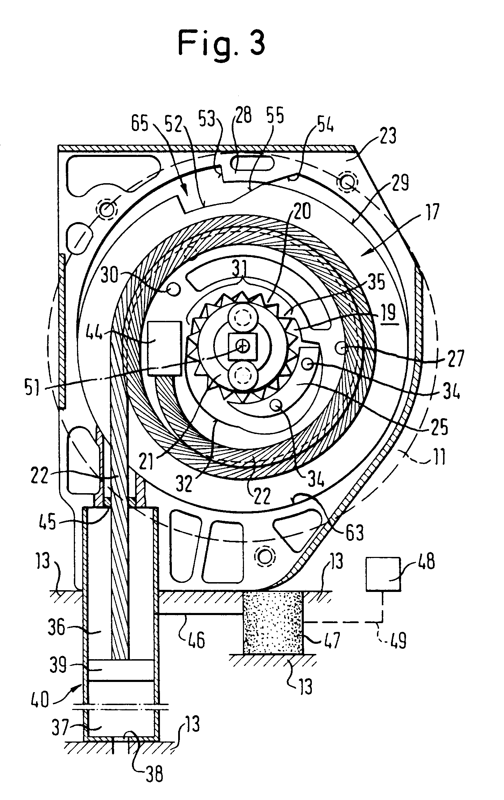

Nach Fig. 3 ist die Strafferscheibe 18 in einer Ausnehmung 65 des Gehäuses angeordnet, welche im Gegensatz zur Strafferscheibe 18 entlang ihres größten Durchmessers nicht genau kreisförmig, sondern vielmehr aus zwei einen geringen Abstand aufweisenden Kreishälften besteht. Auf diese Weise liegt in der nichtausgelösten Position der Strafferscheibe 18 nach Fig. 2 zwischen deren unterem Rand und dem halbkreisförmigen Rand 63 der Ausnehmugn 65 ein mondartig geformter Zwischenraum 64 vor.

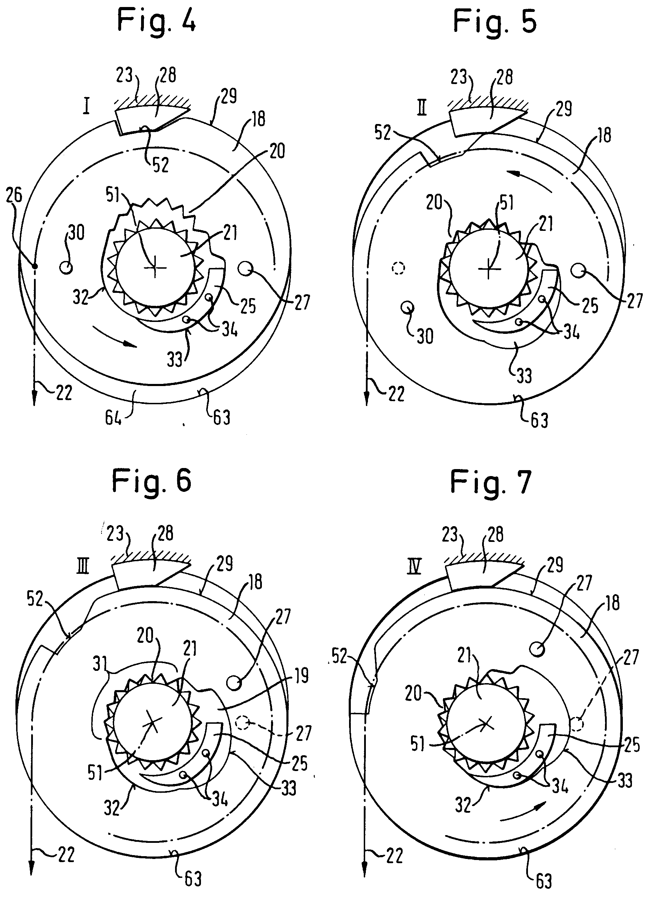

Bei einer Auslösung der Strafferscheibe 18 aus den Positionen nach Fig. 2 bzw. 4 heraus kann sich somit die Strafferscheibe 18 vom Führungsvorsprung 28 weg in den Zwischenraum 64 verschieben, bis sie nach den Fig. 3 und 5 bis 11 am Gehäuserand 63 in gleitenden Eingriff kommt. Hierdurch werden die in diametraler bzw. radialer Richtung vom Zugelement 22 auf den Innenzahnkranz 20 ausgeübten Kräfte direkt von der Strafferscheibe 18 auf das Gehäuse 23 übertragen, so daß das Zahnrad 21 diesbezüglich entlastet ist und nur noch die das Drehmoment erzeugenden Umfangskräfte für das Zahnrad 21 aufnehmen muß.

Die Funktion der erfindungsgemäßen Sicherheitsgurtanordnung wird im folgenden anhand der Fig. 1 bis 11 beschrieben:

Nach dem Anlegen des Anschnallgurtes 14 und Schließen des Gurtschlosses 15 strafft die Wickelfeder 12 den Anschnallgurt 14 in der Weise, daß er locker an der zu sichernden Person anliegt.

Kommt es jetzt zu einem Unfall, so registriert der Sensor 48 die damit verbundenen Beschleunigungen und zündet über die Steuerleitung 49 die pyrotechnische Ladung 47, wodurch im oberen Druckraum 36 des Antriebs 24 schlagartig ein hoher Druck entsteht, der auf das Zugseil 22 eine erhebliche Zugkraft in der Größenordnung von bis zu 8 kN ausübt. Hierdurch wird zunächst der Scherstift 30 zerbrochen, so daß nunmehr die Strafferscheibe 18 aus der in den Fig. 2 und 4 veranschaulichten Ruheposition in die Eingriffsposition nach den Fig. 3 bzw. 5 geschwenkt wird, in welcher der Innenzahnkranz 20 mit dem Zahnrad 21 in drehfestem Eingriff steht.

Dabei bewegt sich die Vertiefung 52 im Umfang der Strafferscheibe 18 in der aus Fig. 3 und 5 ersichtlichen Weise vom Führungsvorsprung 28 weg, wodurch dieser mit der Führungsumfangsfläche 29 der Strafferscheibe 18 in Eingriff gelangt. Gleichzeitig ist der untere Rand der Strafferscheibe 18 mit dem Gehäuserand 63 in gleitenden Eingriff getreten. Dies hat zur Folge, daß nunmehr bei weiterer Verdrehung der jetzt mit der Wickelrolle 11 drehfest verbundenen Strafferscheibe 18 in Richtung des Pfeiles in Fig. 5 der Eingriff des Innenzahnkranzes 20 mit dem Zahnrad 21 zumindest während eines Drehwinkels von 90° gesichert wird und das Zahnrad 21 durch Abstützung der Strafferscheibe 18 am Gehäuserand 63 in diametraler Richtung entlastet ist und nur noch Drehmomente aufzunehmen hat.

Nachdem die Bewegungsphase II nach Fig. 3 und 5 erreicht ist, wird von dem weiter kraftbeaufschlagten Zugseil 22 eine so starke Kraft auf die Strafferscheibe 18 ausgeübt, daß, da die Strafferscheibe 18 jetzt als zweiarmiger Hebel, der links durch das Zugseil 22 beaufschlagt wird, mit einer Drehabstützung am Zahnrad 21 anzusehen ist, schließlich die am rechten Ende dieses Hebels befindliche Sollbruchachse 27 bricht, worauf die Strafferscheibe 18 nunmehr vollständig vom Gehäuse 23 gelöst und konzentrisch zur Wickelrolle 11 angeordnet und drehfest mit ihr verbunden ist.

Nunmehr entfernt sich gemäß Fig. 6 in der Phase III die Ausbuchtung 33 vom Klemmkeil 25 in Gurtaufwickelrichtung, wodurch dieser in einen im Anschluß an den Eingriffsbereich 31 vorgesehenen komplementär keilförmigen Eingriffsbereich eintritt, der von einem entsprechend geformten Umfangsbereich 32 der Mittelöffnung 19 begrenzt ist.

Ab der Umlaufphase IV gemaß Fig. 7 berührt der Klemmkeil 25 den Außenumfangsbereich 32, so daß nunmehr von dort bei weiterer zwangsweiser Drehung der Strafferscheibe 18 und der Gurtaufwickelrolle 11 eine Scherkraft in Richtung des Pfeiles in Fig. 7 auf den Klemmkeil 25 ausgeübt wird, da er in dem Spalt zwischen dem Zahnrad 21 und dem Außenumfangsbereich 32 eingeklemmt wird.

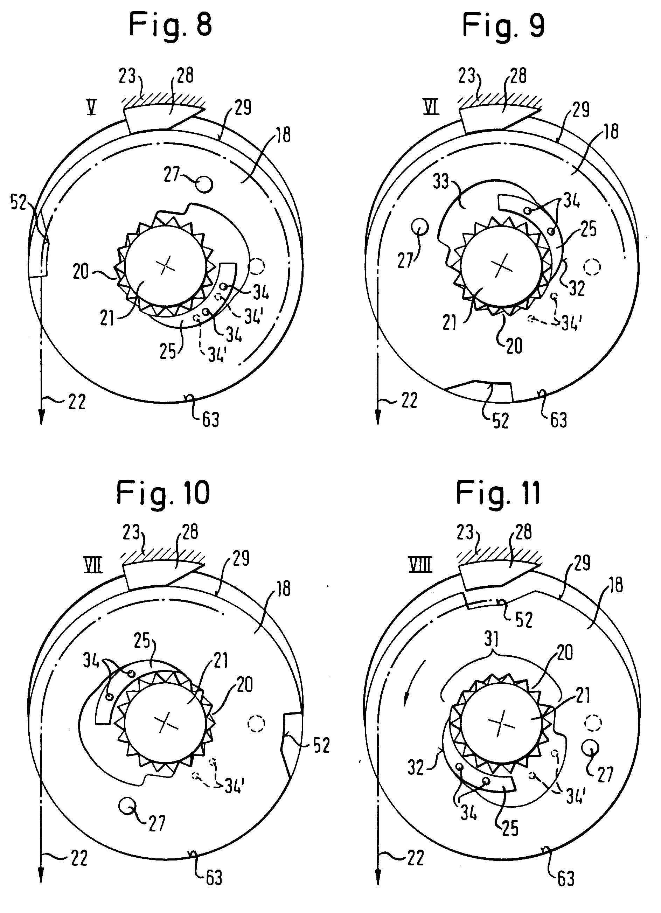

Bei weiterer Drehung (Phase V nach Fig. 8) werden die Scherstifte 34 des Klemmkeils 25 abgeschert, so daß der Klemmkeil 25 Bestandteil der Dreheinheit bestehend aus dem Zahnrad 21 und der Strafferscheibe 18 wird. Die am Gehäuse verbleibenden Scherstiftteile 34' sind in den Fig. 9 bis 12 noch gestrichelt angedeutet.

Der abgescherte Klemmkeil 25 wird jetzt in die in Fig. 9 dargestellte Phase VI von der Dreheinheit Strafferscheibe 18/Wickelrolle 11 mitgenommen. Dadurch, daß er fest zwischen die Zähne des Zahnrades 21 und den Bereich 32 eingeklemmt ist, bleiben der Innenzahnkranz 20 und das Zahnrad 21 in Eingriff, und zwar unabhängig von dem Anliegen des Führungsvorsprunges 28 an der Führungsumfangsfläche 29. Insoweit findet jetzt also eine doppelte Eingriffssicherung statt.

Über die Phase VII in Fig. 10 gelangt die Dreheinheit Strafferscheibe 18/Wickelrolle 11 schließlich in die Phase VIII nach Fig. 11, wo der Führungsvorsprung 28 wieder mit der Ausnehmung 52 im Umfang der Strafferscheibe 18 radial ausgerichtet ist. Dies entspricht ausgehend von der Phase I nach Fig. 4 einer 360°-Umdrehung entgegen dem Uhrzeigersinn.

Obwohl in der Phase VIII nach Fig. 11 die Führung der Strafferscheibe 18 durch den Führungsvorsprung 28 entfällt, bleibt der Eingriff des Innenzahnkranzes 20 und des Zahnrades 21 im Eingriffsbereich 31 erhalten, da der Klemmkeil 25 nach wie vor zwischen dem Zahnrad 21 und dem Umfangsbereich 32 eingeklemmt ist.

Der sich an den etwa 100° betragenden Eingriffsbereich 31 unmittelbar anschließende Klemmbereich des Klemmkeils 25 soll sich über mindestens weitere 40°, insbesondere 60° erstrecken, damit eine einwandfreie Sicherung des Eingriffs von Innenzahnkranz 20 und Zahnrad 21 gewährleistet ist.

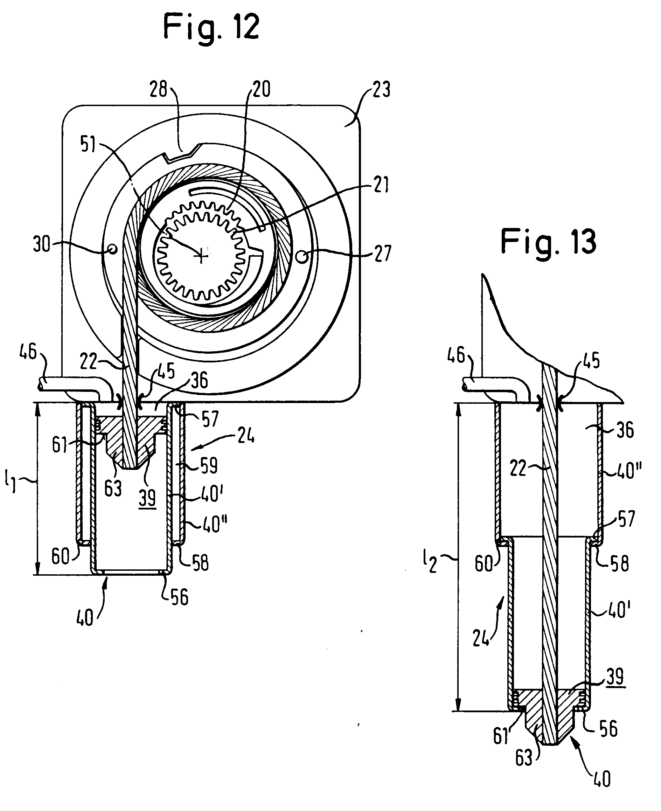

Beim Ausführungsbeispiel nach den Fig. 12 und 13 bezeichnen gleiche Bezugszahlen entsprechende Bauteile wie in den vorangehenden Figuren.

Nach den Fig. 12 und 13 besteht der Zylinder 40 der Kolben-Zylinder-Anordnung 24 aus zwei teleskopisch ineinander verschiebbaren Teilen 40', 40'', wobei der innere Teleskopteil 40' den Kolben 39 aufnimmt und an seinem vom Zugseil 22 abgewandten Ende einen Umfangsanschlag 56 aufweist. Der innere Zylinder-Teleskopteil 40' ist in einem am Gehäuse 23 befestigten äußeren Teleskopteil 40'' gleitend angeordnet, wobei ein radial nach außen gerichteter Flansch 57 am hinteren Ende des inneren Teleskopteils 40' an der Innenfläche des äußeren Teleskopteils 40'' dicht gleitet.

Am vorderen Ende weist das äußere Teleskopteil 40'' des Zylinders 40 einen radial nach innen gerichteten Flansch 58 auf, der am Außenumfang des inneren Teleskopteils 40' gleitet, wobei zur Vermeidung eines Druckaufbaus in dem Umfangsraum 59 am vorderen Ende des teleskopischen Außenteils 40'' eine Entlüftungsöffnung 60 vorgesehen sein sollte.

In der in Fig. 12 dargestellten Ruheposition liegt der hintere Flansch 57 des Innenteleskopteils 40' am Gehäuse 23 an.

Wird jetzt über die Druckleitung 46 nach Zünden der pyrotechnischen Ladung (47 in Fig. 2) Druck an den oberen Zylinderraum 36 angelegt, so schnellt zunächst der Kolben 39 aus der Ruheposition nach Fig. 13 nach unten.

Gelangt der Kolben dann mit seinem Umfangsanschlag 61 an den Anschlagflansch 56, so nimmt er anschließend den inneren Zylinder-Teleskopteil 40' mit, so daß dieser aus dem äußeren Teleskopteil 40'' herausgeschoben wird, bis der radial äußere Umfangsflansch 57 des inneren Teleskopteils 40' am Innenflansch 58 zur Anlage kommt, wie das in Fig. 13 wiedergegeben ist.

Nunmehr hat der Kolben 39 die größtmögliche Auszugslänge erreicht, und der Anschnallgurt 14 ist jetzt bei geeigneter Gesamtdimensionierung gerade fest an den Körper der zu sichernden Person angezogen.

Aufgrund der Ausbildung nach den Fig. 12 und 13 erstreckt sich der Zylinder 40 in der eingezogenen Ruheposition nach Fig. 13 zunächst nur über eine relativ geringe Länge l₁, während er im ausgezogenen Zustand einschließlich des vorn etwas vorstehenden Kolbens 39 eine wesentlich größere Länge l₂ aufweist, die dem gesamt möglichen Seilauszugsweg entspricht. In der in Fig. 12 dargestellten Ruheposition, die während des größten Teils der Lebensdauer einer derartigen Sicherheitsgurtanordnung eingenommen wird, ist also der Platzbedarf für den Antrieb 24 wesentlich herabgesetzt. Gleichwohl steht im Gefahrenfalle eine ausreichend große Auszugslänge zur Verfügung.

Dadurch, daß der Kolben auf der vom Zugseil 22 entfernten Seite über die Ringschulter 61 hinaus noch einen Vorsprung 63 verringerten Durchmessers aufweist, steht für die klemmende Anordnung des Zugseiles 22 im Kolben 39 eine ausreichende Länge zur Verfügung, ohne daß hierdurch der Auszugsbereich verkürzt wird.

## Patentansprüche

1. Sicherheitsgurtanordnung für Kraftfahrzeuge mit einem auf eine am Chassis (13) gelagerte, durch eine Antriebsvorrichtung wie eine Wickelfeder (12) in Aufwickelrichtung vorgespannte Wickelrolle (11) federnd aufwickelbaren, an mindestens zwei, vorzugsweise drei Punkten des Chassis (13) gehaltenen Anschnallgurt (14), welcher um eine zu sichernde Person herumlegbar ist und zwecks wahlweisen Öffnens und Schließens ein Gurtschloß (15) enthält, wobei die Wickelrolle (11) bei unfallbedingten Beschleunigungen durch eine Straffervorrichtung (17) schlagartig um ein solches Stück in Aufwickelrichtung drehbar ist, daß der durch die Antriebsvorrichtung (12) nur lose an die gesicherte Person angelegte Anschnallgurt (14) in feste Anlage an die gesicherte Person gebracht wird und bei ruckartigem Ausziehen des Anschnallgurtes (14) oder den unfallbedingten Beschleunigungen durch eine Sperrvorrichtung (16) in Abwickelrichtung sperrbar ist, wobei die Straffervorrichtung (17) eine vorzugsweise gegenüber einer Stirnseite der Wickelrolle (11) lösbar am Gehäuse (23) befestigte Strafferscheibe (18) umfaßt, die eine Mittelöffnung (19) mit einer zumindest vorzugsweise über einen Teil ihres Umfanges vorgesehenen Innenzahnkranz (20) aufweist, welche ein drehfest mit der Wickelrolle (11) verbundenes Zahnrad (21) mit derartigem Abstand umgibt, daß der Innenzahnkranz (20) in der Ruheposition nicht mit dem Zahnrad (21) in Eingriff steht, und auf welche ein von einem vorzugsweise pyrotechnisch betriebenen, bei unfallbedingten Beschleunigungen auslösbaren Antrieb (24) schlagartig abziehbares flexibles Zugelement (22) derart aufgewickelt ist, daß es beim Auslösen des Antriebes (24) vom Gehäuse (23) gelöst wird, der Innenzahnkranz (20) mit dem Zahnrad (21) in Eingriff kommt und die Wickelrolle (11) in Gurtaufwickelrichtung gedreht wird, und wobei Mittel (25, 28, 29) zur Aufrechterhaltung des Eingriffes des Innenzahnkranzes (20) in das Zahnrad (21) vorgesehen sind,
dadurch **gekennzeichnet,**
daß die Wickelrolle (11) und die Strafferscheibe (18) nach In-Eingriff-Kommen von Innenzahnkranz (20) und Zahnrad (21) konzentrisch zueinander angeordnet sind.

2. Sicherheitsgurtanordnung nach Anspruch 1,
dadurch gekennzeichnet,
daß die Strafferscheibe (18) ab Auftreten einer vorbestimmten Zugkraft am Zugelement (22) um eine dem tangentialen Einlaufpunkt (26) zumindest im wesentlichen diametral gegenüberliegenden Sollbruchachse (27) so weit verschwenkbar ist, daß der Innenzahnkranz (20) mit dem Zahnrad (21) in Eingriff kommen kann, und daß nach dem In-Eingriff-Kommen von Innenzahnkranz (20) und Zahnrad (21) bei Fortbestehen, insbesondere Steigung der vorbestimmten Zugkraft die Sollbruchachse (27) bricht, wobei die Mittel (25, 28, 29) zur Aufrechterhaltung des Eingriffes des Innenzahnkranzes (20) in das Zahnrad (21) den drehfesten Eingriff zwischen dem Innenzahnkranz (20) und dem Zahnrad (21) während der anschließenden gemeinsamen Drehung von Strafferscheibe (18) und Wickelrolle (11) aufrechterhalten, wobei der Innenzahnkranz (20) sich vorzugsweise nur über den Teil des Umfanges erstreckt, wo der Eingriff mit dem Zahnrad (21) stattfindet.

3. Sicherheitsgurtanordnung nach Anspruch 2,
dadurch gekennzeichnet,
daß die Strafferscheibe (18) durch wenigstens einen am Gehäuse (23) abgestützten Scherstift (30) und die Sollbruchachse (27) lösbar am Gehäuse (23) gehalten ist, welche bei Auslösung des Antriebes (24) eher bricht als die Sollbruchachse (27).

4. Sicherheitsgurtanordnung nach Anspruch 2 und 3,
dadurch gekennzeichnet,
daß der Scherstift (30) in einem deutlichen Abstand von der und vorzugsweise allgemein diametral zur Sollbruchachse (27) vorgesehen ist.

5. Sicherheitsgurtanordnung nach einem der Ansprüche 2 bis 4, dadurch gekennzeichnet,
daß die Sollbruchachse (27) als Scherstift ausgebildet ist.

6. Sicherheitsgurtanordnung nach einem der vorhergehenden Ansprüche,
dadurch gekennzeichnet,
daß die Mittel zur Aufrechterhaltung des Eingriffes des Innenzahnkranzes (20) in das Zahnrad (21) einen entgegen der Zugelement-Abwickelrichtung schmaler werdenden Klemmkeil (25) umfassen, der sich nach dem In-Eingriff-Kommen des Innenzahnkranzes mit dem Zahnrad (21) in einem gegenüber diesem Eingriffsbereich (31) umfangsmäßig versetzten Bereich (32) zwischen den Außenumfang der Mittelöffnung (19) und die Zähne des Zahnrades (21) klemmt.

7. Sicherheitsgurtanordnung nach Anspruch 6,
dadurch gekennzeichnet,
daß der sich an den Teil-Innenzahnkranz (20) in Zugelement-Auszugsrichtung ein Umfangsbereich (32) anschließt, der nach dem In-Eingriff-Kommen von Innenzahnkranz (20) und Zahnrad (21) eine zum Klemmkeil (25) im wesentlichen komplementäre Form aufweist.

8. Sicherheitsgurtanordnung nach Anspruch 6 oder 7,
dadurch gekennzeichnet,
daß in der Ruheposition der Klemmkeil (25) das Zahnrad (21) mit geringem Abstand umgebend in einer Ausbuchtung (33) der Mittelöffnung (19) untergebracht und vorzugsweise mittels Scherstiften (34) lösbar am Gehäuse (23) gehalten ist.

9. Sicherheitsgurtanordnung nach einem der Ansprüche 6 bis 8, dadurch gekennzeichnet,
daß die Mittel zur Aufrechterhaltung des Eingriffes des Innenzahnkranzes (20) in das Zahnrad (21) einen Führungsvorsprung (28) umfassen, der in der Ruheposition in allgemein radialer Ausrichtung mit dem Innenzahnkranz (20) steht und nach dem In-Eingriff-Kommen von Innenzahnkranz (20) und Zahnrad (21) mit einer Führungsumfangsfläche (29) der Strafferscheibe (18) radial von außen in Gleiteingriff kommt, derart, daß der Innenzahnkranz (20) und das Zahnrad (21) zumindest solange in Eingriff gehalten werden, bis der Klemmkeil (25) seine Eingriffsposition erreicht hat.

10. Sicherheitsgurtanordnung nach einem der vorhergehenden Ansprüche,
dadurch gekennzeichnet,
daß ein Zahn des Innenzahnkranzes (20), vorzugsweise der der Sollbruchachse (27) am nächsten liegende Zahn als Steuerzahn (35) ausgebildet ist, derart, daß dieser Zahn beim Verschieben bzw. Verschwenken der Strafferscheibe (18) zuerst mit einem Zahn des Zahnrades (21) in Eingriff kommt und so eine einwandfreie Einsteuerung des Innenzahnkranzes (20) in das Zahnrad (21) einleitet.

11. Sicherheitsgurtanordnung nach einem der vorhergehenden Ansprüche,
dadurch gekennzeichnet,
daß der Antrieb eine Kolben-Zylinder-Anordnung (24) ist, deren einer Zylinderraum (36) mit Druckmittel, das vorzugsweise von einer pyrotechnischen Ladung stammt, beaufschlagbar ist.

12. Sicherheitsgurtanordnung nach Anspruch 11,
dadurch gekennzeichnet,
daß der Zylinder (40) teleskopisch ausgebildet ist, derart, daß er im Ruhezustand eine geringere Länge als im vollausgezogenen Zustand des Zugelementes (22) hat, und vom Kolben (39) ausziehbar ist.

13. Sicherheitsgurtanordnung nach einem der vorhergehenden Ansprüche,
dadurch gekennzeichnet,
daß der Innenzahnkranz (20) sich über einen Winkelbereich von 45 bis 135°, bevorzugt 60 bis 120°, zweckmäßigerweise 80 bis 100° und insbesondere etwa 90° erstreckt.

14. Sicherheitsgurtanordnung nach einem der vorhergehenden Ansprüche,
dadurch gekennzeichnet, daß die Strafferscheibe (18) innerhalb einer Ausnehmung (65) des Gehäuses (23) so angeordnet ist, daß auf der vom Innenzahnkranz (20) abgewandten Seite der Drehachse (51) ein Zwischenraum (64) zwischen dem Außenumfang der Strafferscheibe (18) und dem Gehäuserand (63) vorliegt, welcher in radialer Richtung eine solche Ausdehnung hat, daß nach dem In-Eingriff-Kommen des Innenzahnkranzes (20) mit dem Zahnrad (21) der Außenumfang der Strafferscheibe (18) sich gleitend am besagten Gehäuserand (63) abstützt und somit das Zahnrad (21) zumindest weitgehend von den bei einer Auslösung auftretenden Radialkräften entlastet ist.

## Claims

1. Safety belt arrangement for motor vehicles comprising a belt (14) held at at least two and preferably three points of the chassis (13) and capable of being resiliently wound up on a winding reel (11) which is journalled on the chassis (13) and biased in the winding up direction by a drive device such as a winding spring (12), with the belt being capable of being placed around the person to be secured and comprising a belt lock (15) for the purpose of selective opening and closing, with the belt reel (11) being abruptly rotatable in the event of accident-dependent accelerations by a tensioner device (17) by an amount in the winding up direction such that the belt (14), which is only loosely laid against the secured person by the drive device (12), is brought into firm contact with the secured person and can be blocked in the unwinding direction by a blocking device (16) when a jolt-like drawing out of the belt (14) or accident-dependent accelerations occur, with the tensioner device (17) including a tensioner disc (18) which is preferably releasably secured to the housing (23) opposite to one end face of the winding reel (11) and which has a central opening (19) with an inner toothed rim (20) provided at least preferably over a part of its periphery and surrounding a gearwheel (21) rotationally fixedly connected to the winding reel (11) at a distance such that the inner toothed rim (20) does not engage the gearwheel (21) in the rest position, and with a flexible draw element (22) which can be drawn off abruptly by a preferably pyrotechnically operated drive triggerable when accident-dependent accelerations occur, being wound onto the tensioner disc (18) in such a way that it is released from the housing (23) on triggering of the drive (24), the inner toothed rim (20) comes into engagement with the gearwheel (21) and the winding reel (11) is rotated in the belt winding up direction, and wherein means (25, 28, 29) are provided for maintaining the engagement of the inner toothed rim (20) in the gearwheel (21), characterised in that the winding reel (11) and the tensioner disc (18) are arranged concentrically to one another after the inner toothed rim (20) and the gearwheel (21) have come into engagement with one another.

2. Safety belt arrangement in accordance with claim 1, characterised in that the tensioner disc (18) can be pivoted, from the occurrence of a predetermined tension force on the draw element (22) onwards, about a axle (27) intended to break lying at least substantially diametrically opposite to the tangential run-in point (26) to an extent such that the inner toothed rim (20) can enter into engagement with the gearwheel (21); and in that after the entry into engagement of the inner toothed rim (20) and the gearwheel (21), the axis of desired fractures (27) fractures with the continuance and in particular with an increase of the predetermined tension force, with the means (25, 28, 29) for maintaining the engagement of the inner toothed rim (20) into the gearwheel (21) maintaining the rotationally fixed engagement between the inner toothed rim (20) and the gearwheel (21) during the following joint rotation of the tensioner disc (18) and the winding reel (11), with the inner toothed rim (20) preferably extending over only part of the circumference where the engagement with the toothed gearwheel (21) occurs.

3. Safety belt arrangement in accordance with claim 2, characterised in that the tensioner disc (18) is releasably held at the housing (23) by at least one shear pin (30) supported on the housing and by the axis of desired fracture (27), which - on triggering of the drive (24) - breaks earlier than the axle (27) intended to break.

4. Safety belt arrangement in accordance with claim 2 and claim 3, characterised in that the shear pin (30) is provided at a clear spacing from the axle (27) intended to break and preferably generally diametrically opposite thereto.

5. Safety belt arrangement in accordance with one of the claims 2 to 4, characterised in that the axis of desired fracture (27) is formed as a shear pin.

6. Safety belt arrangement in accordance with one of the preceding claims, characterised in that the means for maintaining the engagement of the inner toothed rim (20) into the gearwheel (21) includes a clamping wedge (25), which becomes narrower opposite to the unwinding direction of the draw element and which, after the inner toothed rim has entered into engagement with the gearwheel (21), clamps within a region (32) displaced circumferentially relative to this engagement region (31) between the outer circumference of the central opening (19) and the teeth of the gearwheel (21).

7. Safety belt arrangement in accordance with claim 6, characterised in that a circumferential region (32) adjoins the partial inner toothed rim (20) in the pull-out direction of the draw element and, after the inner toothed rim (20) has entered into engagement with the gearwheel (21), has a shape substantially complementary to the clamping wedge (25).

8. Safety belt arrangement in accordance with claim 6 or 7, characterised in that in the rest position the clamping wedge (25) is accommodated with a small spacing in a recess (33) of the central opening (19) while surrounding the gearwheel (21) and is preferably releasably held on the housing (23) by means of shear pins (34).

9. Safety belt arrangement in accordance with one of the claims 6 to 8, characterised in that the means for maintaining the engagement of the inner toothed rim (20) into the gearwheel (21) includes a guide projection (28) which, in the rest position, stands in generally radial alignment with the inner toothed rim (20) and, after the inner toothed rim (20) has entered into engagement with the gearwheel (21), comes radially into sliding engagement with a circumferential guide surface (29) of the tensioner disc (18) from the outside in such a way that the inner toothed rim (20) and the gearwheel (21) are kept in engagement at least until the clamping wedge (25) has reached its engagement position.

10. Safety belt arrangement in accordance with one of the preceding claims, characterised in that a tooth of the inner toothed rim (20), preferably the tooth lying next to the axis of desired fracture (27), is formed as a control tooth (35) in such a way that this tooth first enters into engagement with a tooth of the gearwheel (21) on a displacement or pivoting of the tensioner disc (18) and thus introduces a problem-free engagement of the inner toothed rim (20) into the gearwheel (21).

11. Safety belt arrangement in accordance with one of the preceding claims, characterized in that the drive is a piston-in-cylinder arrangement (24), the one cylinder space (36) of which can be pressurised with a pressure medium which preferably originates from a pyrotechnical charge.

12. Safety belt arrangement in accordance with claim 11, characterized in that the cylinder (40) is telescopically designed in such a way that it has a smaller length in the rest state than in the fully drawn out state of the draw element (22) and can be drawn out by the piston (39).

13. Safety belt arrangement in accordance with one of the preceding claims, characterized in that inner toothed rim (20) extends over an angular range of 45 to 135°, preferably of 60 to 120°, expediently of 80 to 100°and in particular of approximately 90°.

14. Safety belt arrangement in accordance with one of the preceding claims, characterized in that the tensioner disc (18) is arranged within a recess (65) of the housing (23) so that an intermediate space (64) is present between the outer periphery of the tensioner disc (18) and the rim (63) of the housing at the side of the axis of rotation (51) remote from the inner toothed rim (20) and has an extent in the radial direction such that, after the inner toothed rim (20) has entered into engagement with the gearwheel (21), the outer periphery of the tensioner disc (18) is slidingly supported on the said housing rim (63) and thus the gearwheel (21) is at least largely relieved from the radial forces which occur during a triggering.

## Revendications

1. Agencement de ceinture de sécurité pour des véhicules automobiles, comportant une ceinture de sécurité (14) qui peut être enroulée élastiquement par une bobine d'enroulement (11) montée sur le châssis (13) et tendue en direction d'enroulement par un dispositif d'entraînement tel qu'un ressort d'enroulement (12), qui est retenue au moins sur deux, de préférence sur trois points du châssis (13), et qui peut être mise autour d'une personne à protéger, et comportant une serrure de ceinture (15) qui peut être au choix ouverte ou fermée, dans lequel la bobine d'enroulement (11) peut être tournée brusquement d'un tel trajet en direction d'enroulement par un dispositif prétensionneur (17), en cas d'accélérations dues à un accident, que la ceinture de sécurité (14) posée seulement de façon lâche contre la personne protégée par le dispositif d'entraînement (12) est amenée en appui ferme contre la personne protégée et peut être bloquée en direction de déroulement par un dispositif de blocage (16), dans le cas d'une sortie brusque de la ceinture de sécurité (14) ou en cas d'accélérations dues à un accident, dans lequel le dispositif prétensionneur (17) comporte un disque prétensionneur (18) fixé sur le boîtier (23), de préférence de façon détachable par rapport à une face frontale de la bobine d'enroulement (11), et présentant une ouverture centrale (19) avec une couronne dentée intérieure (20) prévue de préférence du moins sur une partie de sa périphérie, ladite couronne entourant à distance une roue dentée reliée solidairement en rotation à la bobine d'enroulement (11), ladite distance étant telle que la couronne dentée intérieure (20) n'est pas en engrènement avec la roue dentée (21) dans la position de repos, et sur laquelle est enroulée un élément de traction flexible (22) susceptible d'être tiré brusquement par un entraînement (24) mû de préférence par voie pyrotechnique et déclenchable len cas d'accélérations dues à un accident, de telle sorte que ledit élément de traction est détaché du boîtier (23) lors d'un déclenchement de l'entraînement (24), que la couronne dentée intérieure (20) vient en engrènement avec la roue dentée (21) et que la bobine d'enroulement (11) est tournée en direction d'enroulement de ceinture, et dans lequel sont prévus des moyens (25, 28, 29) pour maintenir l'engrènement de la couronne dentée intérieure (20) dans la roue dentée (21), caractérisé en ce que la bobine d'enroulement (11) et le disque prétensionneur (18) sont agencés concentriquement l'un à l'autre après la venue en engrènement de la couronne dentée intérieure (20) et de la roue dentée (21).

2. Agencement de ceinture de sécurité selon la revendication 1, caractérisé en ce que lors de l'apparition d'une force de traction déterminée sur l'élément de traction (22), le disque prétensionneur (18) peut être basculé autour d'un axe à rupture de consigne (27) situé du moins sensiblement diamétralement en vis-à-vis du point d'entrée tangentiel (26), si loin que la couronne dentée intérieure (20) peut venir en engrènement avec la roue dentée (21), et en ce que qu'après la venue en engrènement de la couronne dentée intérieure (20) et de la roue dentée (21), l'axe à rupture de consigne (27) se rompt lors d'une poursuite, en particulier lors d'une augmentation de la force de traction déterminée, et les moyens (25, 28, 29) pour maintenir l'engrènement de la couronne dentée intérieure (20) dans la roue dentée (21) maintiennent l'engrènement solidaire en rotation entre la couronne dentée intérieure (20) et la roue dentée (21) pendant la rotation commune qui suit du disque prétensionneur (18) et de la bobine d'enroulement (11), la couronne dentée intérieure (20) s'étendant de préférence uniquement sur la partie de la périphérie dans laquelle s'effectue l'engrènement avec la roue dentée (21).

3. Agencement de ceinture de sécurité selon la revendication 2, caractérisé en ce que le disque prétensionneur (18) est retenu par au moins une tige de cisaillement (30) appuyée contre le boîtier et l'axe à rupture de consigne (27) est retenu de façon détachable sur le boîtier (23), laquelle se rompt plutôt que l'axe à rupture de consigne (27) lors du déclenchement de l'entraînement (24).

4. Agencement de ceinture de sécurité selon les revendications 2 et 3, caractérisé en ce que la tige de cisaillement (30) est prévue à une distance nette de l'axe à rupture de consigne (27) et de préférence généralement diamétralement par rapport à celui-ci.

5. Agencement de ceinture de sécurité selon l'une quelconque des revendications 2 à 4, caractérisé en ce que l'axe à rupture de consigne (27) est réalisé sous forme d'une tige de cisaillement.

6. Agencement de ceinture de sécurité selon l'une quelconque des revendications précédentes, caractérisé en ce que les moyens pour maintenir l'engrènement de la couronne dentée intérieure (20) dans la roue dentée (21) comportent un coin de coincement (25) qui devient plus étroit en sens opposé à la direction de déroulement de l'élément de traction et qui, après la venue en engrènement de la couronne dentée intérieure avec la roue dentée (21), se coince dans une région (32) décalée en sens périphérique par rapport à cette région d'engrènement (31) entre la périphérie extérieure de l'ouverture centrale (19) et les dents de la roue dentée (21).

7. Agencement de ceinture de sécurité selon la revendication 6, caractérisé en ce qu'une région périphérique (32) se raccorde à la couronne dentée intérieure partielle (20) en direction d'étirage de l'élément de traction, qui présente une forme sensiblement complémentaire au coin de coincement (25), après la venue en engrènement de la couronne dentée intérieure (20) et de la roue dentée (21).

8. Agencement de ceinture de sécurité selon l'une ou l'autre des revendications 6 et 7, caractérisé en ce que dans la position de repos, le coin de coincement (25) qui entoure à faible distance la roue dentée (21) est logé dans un évidement (33) de l'ouverture centrale (19) et est retenu de préférence au moyen de tiges de cisaillement (34) de façon détachable sur le boîtier (23).

9. Agencement de ceinture de sécurité selon l'une quelconque des revendications 6 à 8, caractérisé en ce que les moyens pour maintenir l'engrènement de la couronne dentée intérieure (20) dans la roue dentée (21) comportent une saillie de guidage (28) qui est, dans la position de repos, en alignement généralement radial avec la couronne dentée intérieure (20), et qui, après la venue en engrènement de la couronne dentée intérieure (20) et de la roue dentée (21), vient en engagement coulissant radialement depuis l'extérieur avec une surface périphérique de guidage (29) du disque prétensionneur (18), de telle sorte que la couronne dentée intérieure (20) et la roue dentée (21) sont maintenues en engrènement du moins aussi longtemps que le coin de coincement (25) met à atteindre sa position d'engagement.

10. Agencement de ceinture de sécurité selon l'une quelconque des revendications précédentes, caractérisé en ce qu'une dent de la couronne dentée intérieure (20), de préférence la dent la plus proche de l'axe à rupture de consigne (27) est réalisée sous forme d'une dent de pilotage (35), de telle sorte que cette dent vient tout d'abord en engrènement avec une dent de la roue dentée (21) lors du déplacement ou du basculement du disque prétensionneur (18) et qu'elle entraîne une introduction parfaite de la couronne dentée intérieure (20) dans la roue dentée (21).

11. Agencement de ceinture de sécurité selon l'une quelconque des revendications précédentes, caractérisé en ce que l'entraînement est un agencement à piston-et-cylindre (24) dont la chambre cylindrique (36) peut être alimentée par un agent sous pression provenant de préférence d'une charge pyrotechnique.

12. Agencement de ceinture de sécurité selon la revendication 11, caractérisé en ce que le cylindre (40) est réalisé de façon télescopique, de telle sorte qu'il présente, dans la position de repos, une longueur plus faible qu'à l'état entièrement étiré de l'élément de traction (22), et en ce qu'il peut être étiré par le piston (39).

13. Agencement de ceinture de sécurité selon l'une quelconque des revendications précédentes, caractérisé en ce que la couronne dentée intérieure (20) s'étend sur une région angulaire de 45 à 135°, de préférence de 60 à 120°, judicieusement de 80 à 100° et en particulier d'environ 90°.

14. Agencement de ceinture de sécurité selon l'une quelconque des revendications précédentes, caractérisé en ce que le disque prétensionneur (18) est agencé à l'intérieur d'un évidement (65) du boîtier (23), de telle sorte que, sur la face de l'axe de rotation (51) détournée de la couronne dentée intérieure (20), il existe un intervalle (64) entre la périphérie extérieure du disque prétensionneur (18) et la bordure de boîtier (63), qui présente une telle extension en direction radiale qu'après la venue en engrènement de la couronne dentée intérieure (20) avec la roue dentée (21), la périphérie extérieure du disque prétensionneur (18) s'appuie en coulissement contre ladite bordure de boîtier (63) et que la roue dentée (21) est ainsi du moins largement déchargée des forces radiales qui apparaissent lors d'un déclenchement.
